# EUROPÄISCHE PATENTSCHRIFT

(11) **EP 2 767 019 B1**
(45) Veröffentlichungstag und Bekanntmachung des Hinweises auf die Patenterteilung: **28.04.2021**
(21) Anmeldenummer: 12759679.9
(22) Anmeldetag: 12.09.2012
(51) Int. Cl.: G05B 19/418, H04L 1/08, H04L 1/00, H04L 12/40

(54) **VERFAHREN ZUR TELEGRAMMWEISEN DATENÜBERTRAGUNG**
METHOD FOR TRANSMITTING DATA IN MESSAGES
PROCÉDÉ DE TRANSMISSION DE DONNÉES SOUS FORME DE TÉLÉGRAMME

(30) Priorität: 12.10.2011 DE 102011084364
(43) Veröffentlichungstag der Anmeldung: 20.08.2014
(73) Patentinhaber: Endress+Hauser Wetzer GmbH+Co. KG, 87484 Nesselwang (DE); Safein Train GmbH, 79115 Freiburg (DE)
(72) Erfinder: SCHNALKE, Michael, 87484 Nesselwang (DE); NIEDERER, Manfred, 87527 Sonthofen (DE); DAMITH, Stephan, 87484 Nesselwang (DE); BIECHELE, Peter, 79112 Freiburg (DE)
(74) Vertreter: Andres, Angelika Maria
(86) Internationale Anmeldenummer: PCT/EP2012/067797
(87) Internationale Veröffentlichungsnummer: WO 2013/053559

(56) Entgegenhaltungen:
- DE-A1-102010 001 211
- US-B2- 6 915 444
- US-B2- 7 203 885

## Beschreibung

Die Erfindung bezieht sich auf ein Verfahren zur telegrammweisen Datenübertragung über einen Feldbus der Prozessautomatisierungstechnik.

Ferner bezieht sich die Erfindung auf eine Verwendung des Verfahrens, eine Anordnung umfassend einen ersten und zweiten Teilnehmer eines Feldbusses und auf ein entsprechendes Feldgerät.

Zur telegrammweisen Datenübertragung ist aus dem Stand der Technik bspw. aus der Offenlegungsschrift DE 102007032659 A1 bereits ein Verfahren zur telegrammweisen Datenübertragung bekannt geworden. Dabei wird in einem Nutzdatenblock des Telegramms neben den Nutzdaten auch ein sog. Prüfsummenblock übertragen, der eine aus den Nutzdaten ermittelte Prüfsumme enthält. Dabei ist es Aufgabe der Offenlegungsschrift DE 102007032659 A1, eine besonders hohe Nutzdatenlänge in einem Telegramm bei gleichzeitiger hoher Hamming-Distanz zu erhalten. Zu diesem Zweck wird der Nutzdatenblock in Nutzdatenunterblöcke und Prüfsummenunterblöcke unterteilt. Es ist jedoch von Nachteil, dass dabei die Nutzdaten zerstückelt in unterschiedliche Unterblöcke übertragen werden, was bei der Zusammensetzung der Daten einen zusätzlichen Aufwand bedeutet.

Die Offenlegungsschrift US6915444, VASKO DAVID A [US] ET AL, offenbart Datenübertragung über einen Feldbus der Prozessautomatisierungstechnik. Wobei eine einzelne Nachricht zwei Teilnachrichten enthält wobei die zweite eine invertierte Version der ersten darstellt.

Es ist daher Aufgabe der vorliegenden Erfindung eine Alternative anzugeben, die eine sichere Übertragung von Daten gewährleistet wird, bei der aber keine Zerstückelung der Nutzdaten erforderlich ist.

Die Aufgabe wird durch ein Verfahren, eine Verwendung des Verfahrens, eine Anordnung umfassend zwei Teilnehmer eines Feldbussystems und ein entsprechendes Feldgerät gelöst.

Hinsichtlich des Verfahrens wird die Aufgabe dadurch gelöst, dass Informationen über den Feldbus in Form von Daten vermittels wenigstens eines Telegramms übertragen werden, wobei die Informationen, insbesondere die gleichen Informationen, vermittels des wenigstens eines Telegramms in einem ersten Datenformat und in einem zweiten Datenformat übertragen werden, wobei sich das erste Datenformat von dem zweiten Datenformat unterscheidet.

Es ist also eine Idee der vorliegenden Erfindung, Informationen über einen Feldbus redundant und/oder diversitär zu übertragen. Zu diesem Zweck werden unterschiedliche Datenformate verwendet, welche die zu übertragenden Informationen repräsentieren. Dadurch wird eine ggfs. zusätzliche Überprüfung der Integrität der übertragenen Daten und/oder des Feldbusses ermöglicht.

In einer Ausgestaltung des Verfahrens weist ein Telegramm einen Nutzdatenblock auf, der zur Übertragung der Informationen in Form von Daten dient, wobei die Informationen, insbesondere die gleichen Informationen, in dem Nutzdatenblock vermittels des wenigstens einen Telegramms, bevorzugt genau eines Telegramms, in dem ersten Datenformat und in dem zweiten Datenformat übertragen werden.

In einer weiteren Ausgestaltung des Verfahrens liegen die Daten in Form einer Bitfolge vor und bei dem zweiten Datenformat handelt es sich, um eine gegenüber dem ersten Datenformat invertierte Bitfolge.

In einer weiteren Ausgestaltung des Verfahrens handelt es sich bei dem zweiten Datenformat um einen Textzeichencode, bspw. einen ASCII-Code.

In einer weiteren Ausgestaltung des Verfahrens handelt es sich bei dem ersten Datenformat um einen Zahlen repräsentierendes Datenformat, bspw. in Ganzzahl- oder in Gleitkommazahl-Darstellung.

In einer weiteren Ausgestaltung des Verfahrens wird durch das erste bzw. das zweite Datenformat vorgegeben, wie die in dem Nutzdatenblock enthaltenen Daten beim Laden, Speichern und/oder Verarbeiten interpretiert werden.

In einer weiteren Ausgestaltung des Verfahrens liegen die Daten in einem ersten Unterblock des Nutzdatenblocks in dem ersten Format und in einem zweiten Unterblock des Nutzdatenblocks in dem zweiten Format vor. Die Daten beinhalten dabei die gleiche/n Information/en unterscheiden sich aber hinsichtlich des Datenformats in dem sie übertragen werden.

In einer weiteren Ausgestaltung des Verfahrens sind der erste und der zweite Unterblock gleich groß, ist der erste Unterblock größer als der zweite Unterblock und/oder ist der zweite Unterblock größer als der erste Unterblock.

In einer weiteren Ausgestaltung des Verfahrens handelt es sich bei den im ersten bzw. zweiten Format vorliegenden Informationen um wenigstens einen, vorzugsweise genau einen, Messwert einer Prozessgröße.

In einer weiteren Ausgestaltung des Verfahrens wird genau ein Telegramm zur Übertragung eines Messwerts bzw. eines Parameters, besonders bevorzugt genau eines Messwertes bzw. genau eines Parameters, verwendet, wobei der Messwert bzw. der Parameter in dem ersten Datenformat und dem zweiten Datenformat in dem Nutzdatenblock des Telegramms übertragen werden bzw. wird.

In einer weiteren Ausgestaltung des Verfahrens werden über den Feldbus Daten gemäß dem HART-Protokoll übertragen.

In einer weiteren Ausgestaltung des Verfahrens weist ein Telegramm neben dem Nutzdatenblock einen dem Nutzdatenblock vorausgehenden Telegrammkopf und einen dem Nutzdatenblock folgenden Prüfsummenblock auf.

In einer weiteren Ausgestaltung des Verfahrens werden die, insbesondere in dem Nutzdatenblock enthaltenen, in dem ersten und in dem zweiten Datenformat vorliegenden Daten von einem Empfänger des Telegramms miteinander verglichen. Die in dem ersten und zweiten Datenformat vorliegenden Informationen können also zur Überprüfung und/oder Überwachung der Datenübertragung über den Feldbus verwendet werden.

In einer weiteren Ausgestaltung des Verfahrens wird in dem Fall, dass die in dem Telegramm in dem ersten und in dem zweiten Datenformat vorliegenden Informationen nicht übereinstimmen, eine entsprechende Fehlermeldung ausgegeben. Zudem kann eine Fehlerreaktion herbeigeführt werden. Eine derartige Fehlerreaktion kann bspw. aus dem Ansteuern eines Aktors, bspw. eines Ventils, bestehen oder aus dem Abschalten bzw. Herunterfahren eines in einer bspw. industriellen Ablage ablaufenden Prozesses bestehen.

In einer weiteren Ausgestaltung des Verfahrens weist ein über den Feldbus übertragenes Telegramm, insbesondere in dem Nutzdatenblock, einen Sequenzzähler und/oder eine Telegrammnummer auf. Durch den Sequenzzähler und/oder die Telegrammnummer können Rückschlüsse auf die Reihenfolge (insbesondere die zeitliche Reihenfolge und zeitliche Differenz) der Telegramme bzw. der Nutzdaten, in der sie über den Feldbus übertragen werden, ermöglicht werden. Eine derartige Auswertung kann durch den Empfänger des Telegramms bzw. der Telegramme ausgeführt werden.

In einer weiteren Ausgestaltung des Verfahrens enthält der Nutzdatenblock ferner einen Zeitstempel. Auf diese Weise kann die zeitliche Differenz zwischen bspw. dem Empfang zweier Telegrammen überwacht werden. Dadurch kann eine Plausibilitätsprüfung der Datenübertragung bpw. anhand hinterlegter Daten oder eines hinterlegten Modells erfolgen. So muss bspw. die Zeitdifferenz zwischen zwei nacheinander empfangenen Telegrammen bspw. stets positiv bzw. negativ sein. Ist dies nicht der Fall, so ist ein Fehler bei der Datenübertragung aufgetreten bzw. die Telegramme haben sich überholt.

Hinsichtlich der Verwendung wird die Aufgabe dadurch gelöst, dass das Verfahren gem. einer der genannten Ausgestaltungen zur Erfüllung einer Sicherheitsfunktion verwendet wird. Bevorzugt wird das Verfahren zur Erfüllung der Sicherheitsfunktion gem. IEC 61508 bzw. 615011 verwendet.

Hinsichtlich der Anordnung wird die Aufgabe durch eine Anordnung umfassend einen ersten und einen zweiten Teilnehmer eines Feldbusses der Prozessautomatisierung gelöst, wobei der erste und der zweite Teilnehmer vorzugsweise Messwerte und/oder Parameter insbesondere sicherheitsrelevante Parameter gem. dem vorgeschlagenen Verfahren in einer der genannten Ausgestaltungen austauschen. Das Verfahren kann bspw. in einem bestimmten Betriebsmodus eines Teilnehmers, bspw. eines Feldgerätes angewandt werden. Bei einem solchen Betriebsmodus kann es sich bspw. um eine sichere Parametrierung und/oder sichere Datenübertragung allgemein handeln. Andererseits sind auch bestimmte besonders kritische Anwendungen in einer bspw. industriellen Anlage denkbar, in der eine besonders sichere Datenübertragung erwünscht ist.

Hinsichtlich des Feldgerätes wird die Aufgabe durch ein Feldgerät der Prozessautomatisierungstechnik zur telegrammweisen Datenübertragung über einen Feldbus gem. dem Verfahren nach einer der genannten Ausgestaltungen gelöst. Dabei kann es ich bei dem ersten und/oder dem zweiten Teilnehmer der vorgeschlagenen Anordnung um ein solches Feldgerät handeln. Derartige Feldgeräte werden bspw. in industriellen Anlagen eingesetzt um dort ablaufende Prozesse zu steuern, zu regeln oder zu überwachen. Insbesondere kann es sich dabei um ein Messgerät zur Erfassung einer chemischen und/oder physikalischen Messgröße handeln.

Die Erfindung wird anhand der nachfolgenden Zeichnungen näher erläutert. Es zeigt:

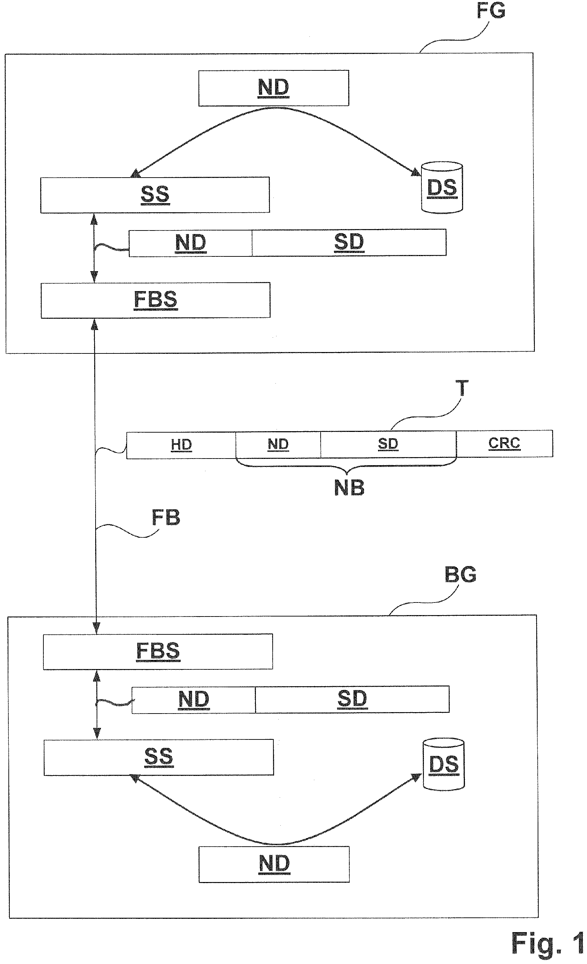

Fig. 1: eine schematische Darstellung des Ablaufs einer telegrammweisen Datenübertragung zwischen einem ersten und einem zweiten Teilnehmer eines Feldbusses.

Figur 1 zeigt einen ersten Teilnehmer FG eines Feldbusses FB bei dem es sich bspw. um ein Feldgerät handelt. Bei einem derartigen Feldgerät kann es sich um einen Sensor, einen Aktor oder eine Bedien- und/oder Anzeigeeinheit handeln, die in einer industriellen Anlage der Prozessautomatisierungstechnik einsetzbar sind. Derartige Feldgeräte werden von der Anmelderin hergestellt und vertrieben.

Der erste Teilnehmer FG verfügt über einen Datenspeicher DS aus dem Nutzdaten ND abgerufen bzw. in den Nutzdaten ND übertragen und/oder abgespeichert werden können. Bei den Nutzdaten ND kann es sich bspw. um Messwerte und/oder um Parameter bzw. Parameterwerte handeln, die von dem ersten Teilnehmer FG aufgenommen und/oder zum bestimmungsgemäßen Betrieb benötigt werden. Die Nutzdaten liegen dabei in einem ersten Datenformat vor, gem. welchem Datenformat sie gespeichert und/oder verarbeitet werden.

Diese Nutzdaten ND können an einen anderen Teilnehmer BG des Feldbusses FB übertragen werden. Prinzipiell ist ein Datenaustausch zwischen dem ersten und dem anderen zweiten Teilnehmer FG, BG über den Feldbus FB, über den die beiden miteinander verbunden sind, möglich.

Der zweite Teilnehmer BG bei dem es sich bspw. um eine übergeordnete Einheit wie bspw. eine Steuereinheit der Anlage, ein Gateway, das einen entfernten Zugriff auf die Anlage ermöglicht, ein anderes Feldgerät oder ein Bediengerät, das zum Bedienen des Feldgerätes, d.h. zum Vornehmen von Einstellungen dient und/oder ein Anzeigeeinheit, die zum Anzeigen von über den Feldbus FB übertragenen Daten dient, handelt, verfügt ebenfalls über einen Datenspeicher DS, in dem Daten wie bspw. Messwerte, die bspw. über den Feldbus FB empfangen worden sind, Parameter etc. gespeichert werden können.

Der erste und der zweite Teilnehmer FG, BG sind dabei, wie gesagt, über einen Feldbus FB miteinander verbunden. Derartige Feldbusse FB sind speziell auf die Anforderungen wie sie in einer industriellen Anlage herrschen zugeschnitten, d.h. sind bspw. leistungsbegrenzt und weisen spezielle Protokolle auf gem. denen eine Datenübertragung stattfindet. Ein derartiges Protokoll und der entsprechend arbeitende Feldbus ist bspw. das HART-Protokoll demgemäß Daten über den Feldbus FB übertragen werden.

Die digitale Kommunikation über einen solchen Feldbus FB erfolgt dabei in Form von Telegrammen, die üblicherweise über einen Telegrammkopf HD, einen sog. Header, verfügen, der bspw. die Zieladresse, d.h. bspw. die Feldbusadresse des Teilnehmers an den das Telegramm T gerichtet ist, und einen Nutzdatenblock NB aufweist, in dem die an den Empfänger des Telegramms T bestimmten Daten übertragen werden. Ferner weist ein derartiges Telegramm T einen Prüfblock auf, der wie aus dem Stand der Technik bekannt eine Prüfsumme enthält. Durch die Prüfsumme CRC bei der es sich bspw. um eine CRC-Prüfsumme oder beliebige andere Hashs handeln kann, wird die Konsistenz der Daten in dem Nutzdatenblock NB überprüft und dadurch Fehler bei der Datenübertragung vermieden und/oder erkannt. Als Prüfsumme kommen bspw. die aus dem Stand der Technik bekannten Verfahren CRC-16, -32 oder MD5 verwendet werden.

Zur Übertragung vorgesehene Nutzdaten ND können aus dem Datenspeicher DS des ersten Teilnehmers FG an eine Sicherungsschicht SS übergeben werden, die zur Wahrung der Konsistenz der Nutzdaten ND dient. Bei der Sicherungsschicht SS handelt es sich bspw. um ein Programm, das aus den Nutzdaten ND entsprechende Sicherungsdaten SD bestimmt. Diese Sicherungsdaten SD enthalten die gleiche Information bzw. Informationen wie die Nutzdaten ND. Gemäß einer Idee der Erfindung liegen die Sicherungsdaten SD jedoch in einem anderen Datenformat vor als die Nutzdaten ND.

Die Nutzdaten ND werden dabei, wie gesagt, in einem bestimmten Datenformat in dem Datenspeicher SP abgelegt und/oder von dem ersten Teilnehmer FG verarbeitet. Die Sicherungsschicht SS wandelt die in dem ersten Datenformat ND vorliegenden Informationen in ein zweites Datenformat SD um, und erzeugt so einen Datenblock, der eine Information redundant jedoch in den diversitären Datenformaten ND, SD enthält. Dieser Datenblock, der die Nutzdaten ND und die Sicherungsdaten SD enthält, wird dann an einen Feldbus-Stack FBS übergeben, der den Datenblock in ein Telegramm verpackt. Der Feldbus-Stack FBS dient dabei zur insbesondere softwaremäßigen Verwaltung der Kommunikation über den Feldbus FB, wobei die Funktionsweise des Feldbusstack FBS durch das jeweils zur Kommunikation verwendete Feldbusprotokoll bedingt ist. Vermittels des Feldbusstack FBS wird der Datenblock dann in ein Telegramm T verpackt. Das Telegramm T, das die Nutzdaten ND und die Sicherungsdaten SD in dem Nutzdatenblock NB des Telegramms T enthält, wird dann über den Feldbus FB an den zweiten Teilnehmer BG des Feldbusses FB übertragen. Neben dem zweiten Teilnehmer BG kann der Feldbus FB natürlich auch weitere Teilnehmer, nicht gezeigt, aufweisen.

In einer weiteren Variante können die Nutzdaten ND und die Sicherungsdaten SD auch in zwei seperaten Telegrammen übertragen werden, benötigen dann aber bspw. einen Telegramm-Zähler bzw. Sequenz-Zähler, um die beiden Telegramme beim Empfänger wieder zuordnen zu können.

Der zweite Teilnehmer BG empfängt das Telegramm T über seinen Feldbus-Stack FBS und extrahiert daraus den die Nutzdaten ND und die Sicherungsdaten SD enthaltenden Nutzdatenblock NB. Dieser Datenblock wird dann einer ebenfalls in dem zweiten Teilnehmer BG vorgesehenen Sicherungsschicht SS verarbeitet. Dabei können die Nutzdaten ND und die Sicherungsdaten SD miteinander verglichen und so auf Konsistenz geprüft werden. Zu diesem Zweck werden die in den verschiedenen Datenformaten enthaltenen Informationen miteinander verglichen. Dazu kann ein entsprechendes Programm verwendet werden. Falls der Vergleich Unterschiede meldet, kann eine entsprechende Reaktion erfolgen. Dies kann eine erneute Übertragung der Daten sein, das Verwerfen und nicht Weiterverarbeiten der Daten und/oder das Melden eines Fehlers an eine weitere Instanz, wie bspw. eine Bedienperson und/oder ein Leitsystem bspw. in Form einer Steuereinheit. Das Leitsystem kann dann bspw. die weitere Fehlerverarbeitung durchführen. Ferner kann durch das vorgeschlagene Verfahren ein Plausibilitäts-Schluss aus den erhaltenen Informationen, bspw. aus der Abweichung zwischen dem Zeitpunkt und/oder der Zeitdifferenz zwischen dem Empfangen zweier Telegramme liegt, ausgeführt werden.

Anschließend können die von dem ersten Teilnehmer empfangenen bzw. übertragenen Nutzdaten ND in dem Datenspeicher des zweiten Teilnehmers BG, bei dem es sich bspw. um ein Bediengerät bevorzugt in Form eines Handbediengerätes handelt, abgelegt, angezeigt oder weiterverarbeitet werden.

Zur Übertragung der Nutzdaten ND und der Sicherungsdaten SD über den Feldbus FB kann das Telegramm T neben den Sicherungsdaten SD in dem Nutzdatenblock NB eben noch einen Checksummenblock CRC enthalten, der ebenfalls zur Überprüfung der Konsistenz der Daten in dem Nutzdatenblock NB dient. Dieser Checksummenblock CRC wir dabei durch den Feldbus-Stack FBS ausgewertet. Dadurch wird ein zweistufiges Verfahren vorgeschlagen, durch das die Konsistenz der Nutzdaten überprüft wird.

Auf die oben beschriebene Weise kann natürlich auch eine Datenübertragung von dem zweiten Teilnehmer BG an den ersten Teilnehmer FG erfolgen. Die vorliegende Erfindung kann daher nicht nur zum sicheren Übertragen von Messwerten, d.h. Nutzdaten ND, sondern auch zur sicheren Parametrierung eines Feldgerätes eingesetzt werden. Zudem ist auch die Verwendung zur sicheren Übertragung und Festlegung/Konfiguration von Parametern eines Feldgerätes möglich. Dabei können bspw. Bediengeräte und/oder Bedienprogramme bzw. ein zugehöriger Kommunikationskanal als nicht sicher entsprechend der Norm IEC 61508 sein. Durch die vorgeschlagene Erfindung kann nun bspw. durch eine Bestätigung eines Benutzers, dem die in dem Nutzdatenblock NB übertragenen Informationen angezeigt werden, die korrekte Übermittlung der Daten überprüft werden und damit die Norm IEC 61508 in Kombination mit der EN 50159 erfüllt werden.

### Bezugszeichenliste

- FG: Feldgerät
- DS: Datenspeicher
- BG: Bediengerät
- FBS: Feldbusstack
- FB: Feldbus
- SS: Sicherungsschicht
- ND: Nutzdaten
- SD: Sicherungsdaten
- NB: Nutzdatenblock
- T: Telegramm
- CRC: Prüfsumme/Prüfsummenblock

## Patentansprüche

1. Verfahren zur telegrammweisen Datenübertragung über einen Feldbus (FB) der Prozessautomatisierungstechnik,
wobei Informationen von einem ersten Teilnehmer (FG) and einen zweiten Teilnehmer (BG) über den Feldbus in Form von Daten vermittels wenigstens eines Telegramms (T) übertragen werden,
wobei das wenigstens eine Telegramm einen Nutzdatenblock aufweist, der zur Übertragung der Informationen dient, und wobei die gleichen Informationen in dem Nutzdatenblock (NB) vermittels des wenigstens einen Telegramms, bevorzugt genau eines Telegramms, in einem ersten Datenformat (ND) und in einem zweiten Datenformat (SD) übertragen werden wobei es sich bei den Informationen um wenigstens einen Messwert einer Prozessgröße oder einen Parameter eines Feldgerätes handelt wobei es sich bei den Daten in dem ersten Datenformat um Nutzdaten handelt, welche Nutzdaten in dem ersten Datenformat (ND) vorliegen, und welche Nutzdaten aus einem Datenspeicher des ersten Teilnehmers (FG) abgerufen werden und an eine Sicherungsschicht (SS), bspw. ein Programm, übergeben werden, die zur Wahrung der Konsistenz der Nutzdaten dient,
wobei die Sicherungsschicht (SS) aus den Nutzdaten (ND) entsprechende Sicherungsdaten (SD) bestimmt, welche Sicherungsdaten (SD) die gleiche Information bzw. Informationen wie die Nutzdaten (ND) enthalten,
wobei die Sicherungsdaten in dem zweiten Datenformat (SD) übertragen werden, wobei sich das erste Datenformat (ND) von dem zweiten Datenformat (SD) unterscheidet, und
wobei die, insbesondere in einem Nutzdatenblock (NB) des wenigstens einen Telegramms (T) enthaltenen, in dem ersten und in dem zweiten Datenformat (ND, SF) vorliegenden Daten von einem Empfänger des wenigstens einen Telegramms (T) miteinander verglichen werden.

2. Verfahren nach Anspruch 1,
wobei die Sicherungsschicht (SS), die in dem ersten Datenformat (ND) vorliegenden Informationen in ein zweites Datenformat (SD) umwandelt, und einen Datenblock erzeugt, der die Nutzdaten (ND) und die Sicherungsdaten (SD) enthält.

3. Verfahren nach Anspruch 2,
wobei der Datenblock, der die Nutzdaten (ND) und die Sicherungsdaten (SD) enthält, an einen Feldbus-Stack (FBS) übergeben wird, der den Datenblock in ein Telegramm verpackt.

4. Verfahren nach Anspruch 3,
wobei zur Übertragung vorgesehene Nutzdaten (ND) aus einem Datenspeicher (DS) des ersten Teilnehmers (FG) an die Sicherungsschicht (SS) übergeben werden.

5. Verfahren nach Anspruch 4,
wobei die Nutzdaten (ND) in einem bestimmten Datenformat in dem Datenspeicher (SP) abgelegt werden.

6. Verfahren nach einem der vorherigen Ansprüche,
wobei durch das erste bzw. das zweite Datenformat (ND, SD) vorgegeben wird, wie die, insbesondere in dem Nutzdatenblock (NB) des wenigstens einen Telegramms enthaltenen, Daten beim Laden, Speichern und/oder Verarbeiten interpretiert werden.

7. Verfahren nach einem der Ansprüche 1 bis 6,
wobei die Daten in einem ersten Unterblock des Nutzdatenblocks (NB) in dem ersten Datenformat (ND) und in einem zweiten Unterblock des Nutzdatenblocks in dem zweiten Datenformat (SD) vorliegen.

8. Verfahren nach dem vorherigen Anspruch,
wobei der erste und der zweite Unterblock gleich groß sind, der erste Unterblock größer ist als der zweite Unterblock und/oder der zweite Unterblock größer ist als der erste Unterblock.

9. Verfahren nach einem der Ansprüche 1 bis 8,
wobei ein Telegramm (T) neben dem Nutzdatenblock (NB) einen dem Nutzdatenblock (NB) vorausgehenden Telegrammkopf (HD) und einen dem Nutzdatenblock (NB) folgenden Prüfsummenblock (CRC) aufweist.

10. Verfahren nach einem der vorherigen Ansprüche,
wobei ein zweiter Teilnehmer (BG) das Telegramm über seinen Felbdus-Stack (FBS) empfängt und daraus einen die Nutzdaten (ND) und die Sicherungsdaten (SD) enthaltenden Nutzdatenblock (NB) extrahiert.

11. Verfahren nach dem vorherigen Anspruch,
wobei der Prüfsummenblock (CRC) durch den Feldbus-Stack (FBS) des zweiten Teilnehmers ausgewertet wird.

12. Verfahren nach dem vorherigen Anspruch,
wobei der Nutzdatenblock von einer in dem zweiten Teilnehmer (BG) vorgesehenen Sicherungsschicht (SS) verarbeitet.

13. Verfahren nach dem vorherigen Anspruch,
wobei die Nutzdaten (ND) und die Sicherungsdaten (SD) miteinander verglichen werden.

14. Verfahren nach dem vorherigen Anspruch,
wobei in dem Fall, dass die in dem ersten und in dem zweiten Datenformat (ND, SD) vorliegenden Informationen nicht übereinstimmen, eine entsprechende Fehlermeldung ausgegeben wird.

15. Verfahren nach einem der vorherigen Ansprüche,
wobei ein über den Feldbus übertragenes Telegramm (T), insbesondere in dem Nutzdatenblock (NB), ferner einen Sequenzzähler oder eine Telegrammnummer aufweist.

16. Verwendung des Verfahrens nach einem der vorherigen Ansprüche zur Erfüllung einer Sicherheitsfunktion insbesondere der IEC 61508 bzw. der IEC 61511.

17. Anordnung umfassend einen ersten und einen zweiten Teilnehmer (FG, BG)
eines Feldbusses (FB) der Prozessautomatisierungstechnik, wobei der erste und der zweite Teilnehmer (FG, BG) Informationen, vorzugsweise Messwerte und/oder Parameter, gem. dem Verfahren nach einem der Ansprüche 1 bis 16 austauschen.

18. Feldgerät (FG) der Prozessautomatisierungstechnik zur telegrammweisen Datenübertragung über einen Feldbus (FB) gem. dem Verfahren nach einem der Ansprüche 1 bis 16.

19. Feldgerät (FG) nach dem vorherigen Anspruch,
wobei das Feldgerät (FG) einen Betriebsmodus aufweist, in welchem Betriebsmodus eine sichere Parametrierung und/oder sichere Datenübertragung gem. dem Verfahren nach einem der Ansprüche 1 bis 16 durchgeführt wird.

## Claims

1. Method for telegram-based data transmission via a fieldbus (FB) used in process automation engineering,
wherein information is transmitted from a first user (FG) to a second user (BG) via the fieldbus in the form of data by means of at least a telegram (T),
wherein the at least one telegram features a payload data block, which serves to transmit information, and wherein the same information is transmitted in the payload data block (NB) by means of the at least one telegram, preferably exactly one telegram, in a first data format (ND) and in a second data format (SD), wherein the information concerns at least a measured value of a process variable or a parameter of a field device,
wherein the data in the first data format are payload data, said payload data being present in the first data format (ND), and wherein said payload data are called from a data memory of the first user (FG) and are transferred to a data link layer (SS), for example a program, which serves to ensure the consistency of the payload data,
wherein the data link layer (SS) determines corresponding backup data (SD) from the payload data (ND), wherein said backup data (SD) contain the same information as the payload data (ND),
wherein the backup data are transmitted in the second data format (SD), wherein the first data format (ND) differs from the second data format (SD), and wherein the data particularly contained in a payload data block (NB) of the at least one telegram (T), which are available in the first and second data format (ND, SF), are compared with one another by a recipient of the at least one telegram (T).

2. Method as claimed in Claim 1,
wherein the data link layer (SS) converts the information in the first data format (ND) to a second data format (SD), and generates a data block containing the payload data (ND) and the backup data (SD).

3. Method as claimed in Claim 2,
wherein the data block that contains the payload data (ND) and the backup data (SD) is transmitted to a fieldbus stack (FBS), which packs the data block in a telegram.

4. Method as claimed in Claim 3,
wherein the payload data (ND) that are to be transmitted are transferred from a data memory (DS) of the first user (FG) to the data link layer (SS).

5. Method as claimed in Claim 4,
wherein the payload data (ND) are saved in the data memory (SP) in a certain data format.

6. Method as claimed in one of the previous claims,
wherein the first or the second data format (ND, SD) specifies how the data, particularly the data contained in the payload data block (NB) of the at least one telegram, are interpreted during loading, saving and/or processing.

7. Method as claimed in one of the Claims 1 to 6,
wherein the data are available in the first data format (ND) in a first sub-block of the payload data block (NB) and in the second data format (SD) in a second sub-block of the payload data block.

8. Method as claimed in the previous claim,
wherein the first and second sub-blocks are of the same size, the first sub-block is bigger than the second sub-block and/or the second sub-block is bigger than the first sub-block.

9. Method as claimed in one of the Claims 1 to 8,
wherein, in addition to the payload data block (NB), a telegram (T) has a telegram head (HD) preceding the payload data block (NB) and a checksum block (CRC) following the payload data block (NB).

10. Method as claimed in one of the previous claims,
wherein a second user (BG) receives the telegram via its fieldbus stack (FBS) and extracts from the telegram a payload data block (NB) containing the payload data (ND) and the backup data (SD).

11. Method as claimed in the previous claim,
wherein the checksum block (CRC) is evaluated by the fieldbus stack (FBS) of the second user.

12. Method as claimed in the previous claim,
wherein the payload data block is processed by a data link layer (SS) provided in the second user (BG).

13. Method as claimed in the previous claim,
wherein the payload data (ND) and the backup data (SD) are compared with one another.

14. Method as claimed in the previous claim,
wherein in the event that the information in the first and second data format (ND, SD) does not match, an error message is output to this effect.

15. Method as claimed in one of the previous claims,
wherein a telegram (T) transmitted via the fieldbus, particularly in the payload data block (NB), further has a sequence counter or a telegram number.

16. Application of the method as claimed in one of the previous claims for the purpose of satisfying a security function, particularly according to the IEC 61508 or IEC 61511 standard.

17. Arrangement comprising a first and a second user (FG, BG) of a fieldbus (FB) used in process automation engineering, wherein the first and the second users (FG, BG) exchange information, preferably measured values and/or parameters, according to the method as claimed in one of the Claims 1 to 16.

18. Field device (FG) used in process automation engineering for telegram-based data transmission via a fieldbus (FB) according to the method as claimed in one of the Claims 1 to 16.

19. Field device (FG) as claimed in the previous claim,
wherein the field device (FG) has an operating mode in which the secure parameterization and/or secure data transmission is performed according to the method as claimed in one of the Claims 1 to 16.

## Revendications

1. Procédé destiné à la transmission de données sous forme de télégrammes via un bus de terrain (FB) de la technique d'automatisation des process,
pour lequel des informations sont transmises d'un premier utilisateur (FG) à un deuxième utilisateur (BG) via le bus de terrain sous forme de données au moyen d'au moins un télégramme (T),
procédé pour lequel l'au moins un télégramme présente un bloc de données utiles, qui sert à la transmission des informations, et les mêmes informations étant transmises dans le bloc de données utiles (NB) au moyen de l'au moins un télégramme, de préférence exactement un télégramme, dans un premier format de données (ND) et dans un deuxième format de données (SD),
procédé pour lequel il s'agit, concernant les informations, au moins d'une valeur mesurée d'une grandeur de process ou d'un paramètre d'un appareil de terrain, procédé pour lequel il s'agit, concernant les données dans le premier format de données, de données utiles, lesquelles données utiles sont présentes dans le premier format de données (ND), et lesquelles données utiles sont extraites d'une mémoire de données du premier utilisateur (FG) et transférées à une couche de liaison de données (SS), par exemple un programme, qui sert à maintenir la cohérence des données utiles,
la couche de liaison de données (SS) déterminant les données de sauvegarde (SD) correspondantes à partir des données utiles (ND), lesquelles données de sauvegarde (SD) contenant la même information ou les mêmes informations que les données utiles (ND),
les données de sauvegarde étant transmises dans le deuxième format de données (SD),
le premier format de données (ND) étant différent du deuxième format de données (SD), et
les données contenues notamment dans un bloc de données utiles (NB) de l'au moins un télégramme (T), qui sont disponibles dans le premier et le deuxième format de données (ND, SF), étant comparées entre elles par un destinataire de l'au moins un télégramme (T).

2. Procédé selon la revendication 1,
pour lequel la couche de liaison de données (SS) convertit les informations présentes dans le premier format de données (ND) en un deuxième format de données (SD), et génère un bloc de données comprenant les données utiles (ND) et les données de sauvegarde (SD).

3. Procédé selon la revendication 2,
pour lequel le bloc de données contenant les données utiles (ND) et les données de sauvegarde (SD) est transféré à une pile de bus de terrain (FBS), qui compacte le bloc de données dans un télégramme.

4. Procédé selon la revendication 3,
pour lequel des données utiles (ND) destinées à être transmises sont transférées d'une mémoire de données (DS) du premier utilisateur (FG) à la couche liaison de données (SS).

5. Procédé selon la revendication 4,
pour lequel les données utiles (ND) sont enregistrées dans un format de données spécifique dans la mémoire de données (SP).

6. Procédé selon l'une des revendications précédentes,
pour lequel le premier ou le deuxième format de données (ND, SD) spécifie comment les données, notamment contenues dans le bloc de données utiles (NB) d'au moins un télégramme, sont interprétées pendant le chargement, le stockage et/ou le traitement.

7. Procédé selon l'une des revendications 1 à 6,
pour lequel les données sont présentes dans un premier sous-bloc du bloc de données utiles (NB) dans le premier format de données (ND) et dans un deuxième sous-bloc du bloc de données utiles dans le deuxième format de données (SD).

8. Procédé selon la revendication précédente,
pour lequel les premier et deuxième sous-blocs sont de taille égale, le premier sous-bloc étant plus grand que le deuxième sous-bloc et/ou le deuxième sous-bloc étant plus grand que le premier sous-bloc.

9. Procédé selon l'une des revendications 1 à 8,
pour lequel un télégramme (T) comporte, en plus du bloc de données utiles (NB), un en-tête de télégramme (HD) précédant le bloc de données utiles (NB) et un bloc de somme de contrôle (CRC) suivant le bloc de données utiles (NB).

10. Procédé selon l'une des revendications précédentes,
pour lequel un deuxième utilisateur (BG) reçoit le télégramme via sa pile de bus de terrain (FBS) et en extrait un bloc de données utiles (NB) contenant les données utiles (ND) et les données de sauvegarde (SD).

11. Procédé selon la revendication précédente,
pour lequel le bloc de somme de contrôle (CRC) est évalué par la pile du bus de terrain (FBS) du deuxième utilisateur.

12. Procédé selon la revendication précédente,
pour lequel le bloc de données utiles est traité par une couche de liaison de données (SS) prévue dans le deuxième utilisateur (BG).

13. Procédé selon la revendication précédente,
pour lequel les données utiles (ND) et les données de sauvegarde (SD) sont comparées entre elles.

14. Procédé selon la revendication précédente,
pour lequel au cas où les informations présentes dans le premier et le deuxième format de données (ND, SD) ne correspondent pas, un message d'erreur correspondant est émis.

15. Procédé selon l'une des revendications précédentes,
pour lequel un télégramme (T) transmis via le bus de terrain, notamment dans le bloc de données utiles (NB), comprend en outre un compteur de séquences ou un numéro de télégramme.

16. Utilisation du procédé selon l'une des revendications précédentes en vue de l'accomplissement d'une fonction de sécurité, notamment selon la norme IEC 61508 ou la norme IEC 61511.

17. Arrangement comprenant un premier et un deuxième utilisateur (FG, BG) d'un bus de terrain (FB) de la technique d'automatisation, le premier et le deuxième utilisateur (FG, BG) échangeant des informations, de préférence des valeurs mesurées et/ou des paramètres, conformément au procédé selon l'une des revendications 1 à 16.

18. Appareil de terrain (FG) de la technique d'automatisation des process, destiné à la transmission de données sous forme de télégrammes via un bus de terrain (FB) conformément au procédé selon l'une des revendications 1 à 16.

19. Appareil de terrain (FG) selon la revendication précédente,
l'appareil de terrain (FG) présente un mode de fonctionnement, dans lequel mode de fonctionnement est effectué un paramétrage sécurisé et/ou une transmission de données sécurisée conformément au procédé selon l'une des revendications 1 à 16.
